Europäisches Patentamt

European Patent Office

Office européen des brevets

(11) Veröffentlichungsnummer: **0 158 089**
**B1**

(12) **EUROPÄISCHE PATENTSCHRIFT**

(45) Veröffentlichungstag der Patentschrift: **18.07.90**

(51) Int. Cl.⁵: **H 04 B 3/44**

(21) Anmeldenummer: **85102218.6**

(22) Anmeldetag: **28.02.85**

(54) Verfahren zur Leistungsfernspeisung auf Koaxialkabeln sowie Anordnung zum Durchführen.

(30) Priorität: **13.04.84 DE 3413920**

(43) Veröffentlichungstag der Anmeldung:
**16.10.85 Patentblatt 85/42**

(45) Bekanntmachung des Hinweises auf die
Patenterteilung:
**18.07.90 Patentblatt 90/29**

(84) Benannte Vertragsstaaten:
**FR IT NL SE**

(56) Entgegenhaltungen:
BE-A- 527 209
US-A-2 504 692

BBC-NACHRICHTEN, Band 45, Nr. 7, Juli 1963,
Seiten 355-362, Mannheim, DE; E. ALBERTI:
"Korrosion und Korrosionsschutz an
Metallmänteln von Leitungen und Kabeln"

(73) Patentinhaber: **ANT Nachrichtentechnik GmbH
Gerberstrasse 33
D-7150 Backnang (DE)**

(72) Erfinder: **Prisille, Klaus, Ing.-grad.
Elbinger Strasse 93
D-7150 Backnang (DE)**

Courier Press, Leamington Spa, England.

## Beschreibung

Die Erfindung betrifft ein Verfahren zur Leistungsfernspeisung gemäß dem Oberbegriff des Patentanspruchs 1.

Bei der Leistungsfernspeisung unter Ausnutzung des Innen- und Außenleiters eines Koaxialkabels zur Leistungsübertragung tritt bei Beschädigung des Isolationsmantels elektrolytische Korrosion auf, insbesondere bei erdverlegten Kabeln. Bei Wechselspannungsfernspeisung tritt eine elektrolytische Korrosion hingegen kaum auf (Hütte IV B, 28. Auflage, 1962, Seite 1476). Bei Gleichstromfernspeisung unter ausschließlicher Benutzung des Innenleiters (Technische Mitteilungen, AEG-TELEFUNKEN, Beiheft "Neue Entwicklungen auf dem Gebiet der Trägerfrequenztechnik", Seiten 60 bis 64) zur Leistungsübertragung — Gleichstromreihenspeisung — tritt eine elektrolytische Korrosion ebenfalls nicht auf. Ein wirksamer elektrischer Korrosionsschutz ist bei herkömmlicher Leistungsfernspeisung unter Ausnutzung des Innen- und Außenleiters zur Leistungsübertragung kaum möglich.

Der Erfindung liegt daher die Aufgabe zugrunde, ein Verfahren gemäß dem Oberbegriff des Patentanspruchs 1 anzugeben, welches die elektrolytische Korrosion wesentlich hemmt. Außerdem soll eine geeignete Anordnung zur Durchführung dieses Verfahrens angegeben werden.

Diese Aufgabe wird durch die kennzeichnenden Merkmale des Patentanspruchs 1 gelöst. Die Ansprüche 2 und 3 geben vorteilhafte Weiterbildungen dieses Verfahrens an. Anspruch 4 zeigt eine Anordnung zur Durchführung des Verfahrens auf.

Es ist zwar prinzipiell bekannt, bei der Gleichstrom-Fernspeisung die Speisespannung umzupolen. Dies geschieht jedoch nur, um einen vom Fernspeisestrom unterscheidbaren Prüfstrom auswerten zu können (DE 32 16 497 A1). Eine Anregung, die Umpolung der Speisespannung zur Korrosionshemmung heranzuziehen, gibt die DE 32 16 497 A1 nicht.

Die Vorteile der Erfindung ergeben sich insbesondere dadurch, daß eine Korrosionshemmung bei gleichzeitiger Ausnutzung hoher Gleichspannungsgrenzwerte und damit eine Reduzierung des Fernspeisestromes möglich ist. Daraus resultiert eine größere Übertragungsreichweite und im speziellen Fall eines Breitbandkommunikations-Übertragungsnetzes die Möglichkeit, bereits verlegte Koaxialkabelanlagen mit breitbandigeren ferngespeisten Zwischenverstärkern auszurüsten. Wegen der Personengefährdung sind gemäß VDE 0100 Terhrdung sind gemäß VDE 0100 Teil 410 und VDE 0800 die Spannungsgrenzen auf 50 V für Wechselspannung und auf 120 V für Gleichspannung gelegt worden. Die Gleichspannungsfernspeisung bietet die Möglichkeit, die höhere zulässige Gleichspannung zu nutzen, um damit — bei gleicher übertragener Leistung — den Kabelstrom zu reduzieren. Besonders vorteilhaft ist es, das Tastverhältnis der Umpolung 1:1 zu wählen. Da bei elektrolytischer Korrosion erdverlegter Kabel die Potentialdifferenzen der Kabelleiter gegen das Erdreich entlang der Leitung weder vom Vorzeichen noch vom Betrag im voraus bekannt sind, ist mit dem Tastverhältnis 1:1 ein statistischer Mittelwert vorgegeben, der von der Wahrscheinlichkeit her den Optimalwert darstellt. Sollten jedoch genaue Messungen des Potentialverlaufs entlang der erdverlegten Leitung vorliegen (Hütte IV B, 28. Auflage, 1962, Seite 1483), so kann das Tastverhältnis gezielt auf die Potentialdifferenz eingestellt werden. Die Untergrenze der Periodendauer, d.h. die maximal mögliche Umpolfrequenz, läßt sich leicht systembezogen auswählen.

Anhand der Figur wird die Erfindung nun näher erläutert. Es zeigt die Figur eine Anordnung zur Durchführung des Verfahrens nach der Erfindung.

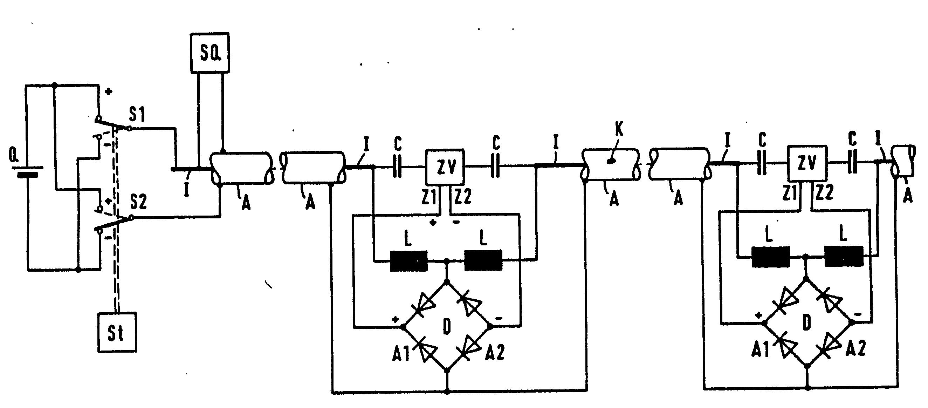

In der Figur ist die Leistungsfernspeisung nach der Erfindung prinzipiell dargestellt, und zwar für den Fall der Gleichspannungs-Parallelspeisung in einem Breitband-Kommunikationsnetz. Prinzipiell ist die Erfindung auch bei jeder Art von Leistungsfernspeisung unter Verwendung des Koaxialaußen- und Innenleiters anwendbar, beispielsweise bei Gleichstromreihen- oder Parallelspeisung. Eine Gleichspannungsquelle Q ist über einen Polwender, bestehend aus den beiden Schaltern S1 und S2 und einer Steuereinrichtung St für diese beiden Schalter, an den Innenleiter I bzw. den Außenleiter A eines Koaxialkabels angeschlossen. Über das Koaxialkabel wird neben dem Fernspeisestrom auch das von der Signalquelle SQ stammende Nachrichtensignal eingespeist. Bei jedem Zwischenverstärkerpunkt oder Endpunkt des Nachrichtenübertragungssystems, der eine Fernspeisespannung benötigt, nur zwei solcher Zwischenpunkte sind in Figur 1 dargestellt, ist eine Dioden-Graetzbrücke D vorgesehen. Eine Brückendiagonale dieser Diodenbrücke D ist an Innenleiter I und Außenleiter A des Koaxialkabels angeschlossen, wohingegen die andere Diagonale zu Ausgangsklemmen A1 und A2 führt. An der Ausgangsklemme A1 tritt so immer Pluspotential auf, egal ob der Außenleiter A der Koaxialleitung Plus- oder Minuspotential führt. Die angebotene Fernspeisespannung mit wechselnder Polarität wird also mittels der Diodenbrücke D in eine kontinuierliche Gleichspannung U festgelegter Polarität umgewandelt und kann so direkt zur Stromversorgung der Zwischenverstärker ZV der Nachrichtenübertragungsanlage herangezogen werden (Eingangsklemmen Z1 und Z2 der Zwischenverstärker). Das zu verstärkende Nachrichtensignal wird über Entkoppelkondensatoren C aus dem Koaxialkabel ausgekoppelt, im Zwischenverstärker ZV verstärkt und in den weiteren Koaxialleiterabschnitt eingekoppelt. Die Entkoppelkondensatoren C sind so dimensioniert, daß das Nachrichtensignal ungehindert zu den Zwischenverstärkern ZV gelangt, der Fernspeisestrom aber abgeblockt wird.

Demgegenüber stellen die Induktivitäten L einen Durchlaß für den Fernspeisestrom dar und sperren das Nachrichtensignal.

Mittels der Steuereinrichtung St wird die Polarität der Fernspeisespannung umgepolt, so daß

2

während einer Halbperiode positives Gleichpotential und während der anderen Halbperiode negatives Gleichpotential am Außenleiter A und umgekehrt dazu am Innenleiter I auftritt. Eine Korrosionsstelle K bildet sich bei Beschädigung der den Außenleiter A umgebenden Isolationshülle. Es könnte nun ohne die erfindungsgemäße Maßnahme Elektrokorrosion zwischen dem Metall des Außenleiters und dem Erdreich auftreten. Da die Potentialdifferenz zwischen Erdreich und dem Außenleiter A weder vom Vorzeichen noch vom Betrag im allgemeinen voraussehbar ist, wählt man das Tastverhältnis für das Umpolen nach dem statistischen Gleichverteilungsgrundsatz 1:1. Für die Periodendauer wird ein Wert zwischen etwa maximal einer Stunde und minimal einer Sekunde gewählt. Die Wahl dieses Wertes ist systembezogen festzulegen. Der Maximalwert für die Periodendauer — etwa eine Stunde — ist ausreichend kurz, daß irreversible elektrolytische Vorgänge, beispielsweise Zerstörung des Außenleiters durch Elektrokorrosion, verhindert werden kann. Der Minimalwert für die Periodendauer — etwa eine Sekunde — ist ausreichend lang, daß schädliche Auswirkungen eines Wechselstromverhaltens, wie z.B. der Einfluß von Umladeenergie, eventuell auftretende Betriebsstörungen, Oberwellenstörungen der Nachrichtenübertragung durch das Umpolen und Personengefährdung (Herzrhythmusstörungen) vernachlässigbar sind.

**Patentansprüche**

1. Verfahren zur Gleichspannungs- oder Gleichstrom-Leistungsfernspeisung auf Koaxialkabeln für leitungsgebundene Nachrichtenübertragungsanlagen unter Ausnutzung des Innen- und Außenleiters zur Leistungsübertragung, dadurch gekennzeichnet, daß die Speisespannung periodisch umgepolt wird, daß die Periodendauer einerseits maximal nur so lang gewählt wird, daß irreversible elektrolytische Vorgänge am Koaxialkabel verhindert werden, und andererseits maximal nur so kurz gewählt wird, daß schädliche Auswirkungen eines Wechselstromverhaltens, z.B. Störeinfluß der Umladeenergie, Betriebsstörungen durch Oberwellen, Personengefährdung, zu vernachlässigen sind, und daß zur Stromversorgung von ferngespeisten Zwischenverstärkern mittels Gleichrichtung eine kontinuierliche Gleichspannung erzeugt wird.

2. Verfahren nach Anspruch 1, dadurch gekennzeichnet, daß für die Periodendauer ein Wert zwischen etwa einer Stunde und einer Sekunde gewählt wird.

3. Verfahren nach Anspruch 1 oder 2, dadurch gekennzeichnet, daß das Tastverhältnis zur periodischen Umpolung 1:1 gewählt wird.

4. Anordnung zur Durchführung des Verfahrens nach einem der Ansprüche 1 bis 4, gekennzeichnet durch einen mit der Speiseenergiequelle verbundenen Polwender (S1, S2, St) und einer verbraucherseitigen Diodenbrückenschaltung (D).

**Revendications**

1. Procédé de téléalimentation en courant fort, sous tension continue, sur des câbles coaxiaux pour des installations de transmission de l'information reliées à la ligne, en employant le conducteur intérieur et le conducteur extérieur pour la transmission du courant fort, caractérisé en ce que l'on inverse périodiquement la polarité de la tension d'alimentation, en ce que l'on choisit la durée de la période d'une part, au maximum d'une longueur telle que des processus électrolytiques irréversibles sur le câble coaxial soient interdits et d'autre part au maximum d'une brièveté telle que les effets nuisibles d'un comportement du type courant alternatif, par exemple influence nuisible de l'énergie de changement d'état de charge, incidents de service provenant des harmoniques, risque pour les personnes, soient négligeables, et en ce que, pour l'alimentation en courant fort des amplificateurs intermédiaires téléalimentés, on produit, en continu, une tension continue au moyen d'un dispositif redresseur.

2. Procédé selon la revendication 1, caractérisé en ce que pour la durée de la période on choisit une valeur comprise entre environ une heure et une seconde.

3. Procédé selon la revendication 1 ou 2, caractérisé en ce que l'on choisit la valeur 1:1 pour le rapport entre la durée d'une polarité et la durée de l'autre polarité pour le changement périodique de polarité.

4. Dispositif pour l'application du procédé selon l'une des revendications 1 à 4, caractérisé par un changeur de polarité (S1, S2, St) lié à la source d'énergie d'alimentation et par un circuit à pont de diodes (D) du côté récepteur.

**Claims**

1. A method for direct voltage or direct current remote power feeding on coaxial cables for cable-bound data transmission devices, using the inner and outer conductor for power feeding, characterized in that the polarity of the supply voltage is periodically reversed, in that the length of the cycle is set only long enough so that irreversible electrolytic occurrences on the coaxial cable are being prevented and is set short enough so that damaging effects of AC behaviour, for example the interfering influence of the charge exchange energy, operational disruptions because of harmonic waves, danger to personnel, are being minimized, and in that by rectification a continuous direct voltage is being generated for the power supply of remotely supplied intermediate repeaters.

2. A method in accordance with claim 1, characterized in that a value between approximately one hour and one second is set for the length of the cycle.

3. A method in accordance with claim 1 or 2, characterized in that the clock ratio for cyclical polarity reversal is set at 1:1.

4. A device for executing the method in accordance with one of claims 1 to 4, characterized by a pole reverser (S1, S2, St), connected to the energy supply source and by a diode bridge circuit (D) on the consumer side.